# EUROPEAN PATENT APPLICATION

(11) **EP 4 657 790 A1**
(43) Date of publication of application: **03.12.2025**
(21) Application number: 24756059.2
(22) Date of filing: 04.02.2024
(51) Int. Cl.: H04L 5/00

(54) **SIGNAL TRANSMISSION METHOD AND APPARATUS**

(30) Priority: 16.02.2023 CN 202310166662
(71) Applicant: Huawei Technologies Co., Ltd., Shenzhen, Guangdong 518129 (CN)
(72) Inventor: SUN, Huan, Shenzhen, Guangdong 518129 (CN); LUO, Zhihu, Shenzhen, Guangdong 518129 (CN); JIN, Zhe, Shenzhen, Guangdong 518129 (CN)
(74) Representative: Pfenning, Meinig & Partner mbB
(86) International application number: PCT/CN2024/075749
(87) International publication number: WO 2024/169685

(57) **Abstract**

A signal transmission method and an apparatus are provided. The method includes: determining a time domain resource available to a first signal, where the time domain resource available to the first signal does not include a first resource; and sending the first signal to a terminal device based on a frequency domain resource occupied by the first signal and the available time domain resource. In the foregoing method, considering that the first resource can ensure that NR performance is not affected, the first signal is sent based on the time domain resource available to the first signal and the frequency domain resource occupied by the first signal. The time domain resource available to the first signal and the frequency domain resource occupied by the first signal can multiplex time-frequency resources of existing NR signals, thereby improving network resource utilization.

## Description

### CROSS-REFERENCE TO RELATED APPLICATION

This application claims priority to Chinese Patent Application No. 202310166662.5, filed with the China National Intellectual Property Administration on February 16, 2023 and entitled "SIGNAL TRANSMISSION METHOD AND APPARATUS", which is incorporated herein by reference in its entirety.

### TECHNICAL FIELD

Embodiments of this application relate to the field of wireless communication, and in particular, to a signal transmission method and an apparatus.

### BACKGROUND

To save energy, new radio (new radio, NR) has began to explore low-power wake-up receivers (low-power wake-up receiver, LP-WUR) and passive internet of things (Ambient Internet of Things, Ambient IoT). LP-WUR and ambient IoT may use incoherent envelope detection demodulation. Modulation schemes that supports incoherent envelope detection includes on-off keying (on-off keying, OOK) modulation, frequency-shift keying (frequency-shift keying, FSK) modulation, or the like.

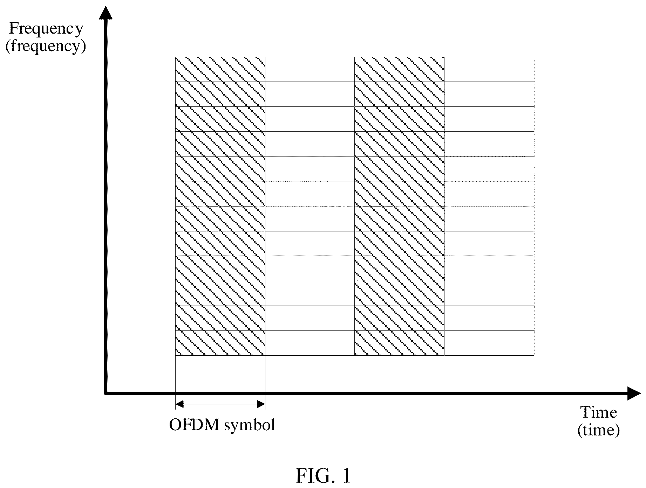

For example, OOK modulation has the characteristic of low spectral efficiency, which leads to low network resource utilization. For example, as shown in FIG. 1, in an orthogonal frequency division multiplexing (orthogonal frequency division multiplexing, OFDM) system, one resource block (resource block, RB) in frequency domain and one OFDM symbol in time domain are typically mapped to obtain one OOK signal, which can carry only 1-bit information. However, an existing NR OFDM symbol can carry at least 12-bit information when occupying a same time-frequency resource.

Therefore, to improve the network resource utilization, how to multiplex existing NR channels or signals for OOK signals becomes a problem worthy of attention.

### SUMMARY

This application provides a signal transmission method and an apparatus, to multiplex existing NR channels or signals for OOK signals while NR performance is ensured.

According to a first aspect, this application provides a signal transmission method. The method includes: determining a time domain resource available to a first signal, where the time domain resource available to the first signal does not include a first resource; and sending the first signal to a terminal device based on a frequency domain resource occupied by the first signal and the available time domain resource.

In the foregoing method, considering that the first resource can ensure that NR performance is not affected, the first signal is sent based on the time domain resource available to the first signal and the frequency domain resource occupied by the first signal. The time domain resource available to the first signal and the frequency domain resource occupied by the first signal may multiplex a time-frequency resource of an existing NR signal, to improve network resource utilization.

In a possible design, the first resource is a time domain resource occupied by a preset signal, a frequency domain resource occupied by the preset signal overlaps the frequency domain resource occupied by the first signal, and the preset signal includes at least one of an SSB, a DMRS, and a CRS.

The time domain resource occupied by the preset signal can be avoided by using the foregoing design, to ensure that NR performance is not affected.

In a possible design, the first resource is a time domain resource corresponding to at least one of a plurality of reserved time-frequency resource blocks, a time-frequency resource occupied by a preset signal overlaps at least one resource element RE occupied by each of the at least one reserved time-frequency resource block, and the preset signal includes at least one of an SSB, a DMRS, and a CRS.

The time domain resource occupied by the preset signal can be avoided by using the foregoing design, to ensure that NR performance is not affected.

In a possible design, first indication information is sent to the terminal device. The first indication information is used for determining the first resource.

In a possible design, the first indication information includes at least two pieces of bitmap indication information, each bit in first bitmap indication information corresponds to a first time unit, each bit in second bitmap indication information corresponds to a second time unit, and the first bitmap indication information and the second bitmap indication information are any two of the at least two pieces of bitmap indication information.

Signaling overheads of a bitmap can be reduced by using the foregoing design.

In a possible design, the first indication information includes a first bitmap type and bitmap indication information corresponding to the first bitmap type, the first bitmap type is one of a plurality of preset bitmap types, and each of the plurality of preset bitmap types indicates numbers of a plurality of orthogonal frequency division multiplexing OFDM symbols.

Signaling overheads of a bitmap can be reduced by using the foregoing design.

In a possible design, numbers indicated by the first bitmap type include 6, 7, 9, and 11; or numbers indicated by the first bitmap type include 5, 6, 7, 8, and 9; or numbers indicated by the first bitmap type include 5, 6, 7, 8, 9, and 12; or numbers indicated by the first bitmap type include 8, 9, 10, and 11.

In a possible design, the preset signal is the DMRS; and the first indication information is determined based on a mapping manner of a physical downlink shared channel PDSCH and a configuration manner of the DMRS.

In a possible design, when the first indication information is determined based on the mapping manner of the physical downlink shared channel PDSCH and the configuration manner of the DMRS, the first indication information is determined based on the mapping manner of the PDSCH being type-A, and the configuration manner of the DMRS includes that a front-loaded DMRS occupies one OFDM symbol and a quantity of additional DMRS groups is less than 3, where the first indication information indicates whether a plurality of OFDM symbols belong to the first resource, and numbers of the plurality of OFDM symbols are respectively 6, 7, 9, and 11. Second indication information is sent to the terminal device, where the second indication information indicates that the mapping manner of the PDSCH is type-A.

Signaling overheads of a bitmap can be reduced by using the foregoing design.

In a possible design, when the first indication information is determined based on the mapping manner of the physical downlink shared channel PDSCH and the configuration manner of the DMRS, the first indication information is determined based on the mapping manner of the PDSCH being type-A, and the configuration manner of the DMRS includes that a front-loaded DMRS occupies one OFDM symbol and a quantity of additional DMRS groups is equal to 3, where the first indication information indicates whether a plurality of OFDM symbols belong to the first resource, and numbers of the plurality of OFDM symbols are respectively 5, 6, 7, 8, 9, and 12. Second indication information and third indication information are sent to the terminal device, where the second indication information indicates that the mapping manner of the PDSCH is type-A, and the third indication information indicates that the quantity of additional DMRS groups is equal to 3.

Signaling overheads of a bitmap can be reduced by using the foregoing design.

In a possible design, it is determined, based on at least one of the first indication information, second indication information, and third indication information, that X OFDM symbols belong to the first resource. The X OFDM symbols correspond to numbers 0, 1, and 2, or the X OFDM symbols correspond to numbers 0, 1, 2, and 3.

In a possible design, when it is determined that the mapping manner of the PDSCH is type-A, and the configuration manner of the DMRS includes that a front-loaded DMRS occupies one OFDM symbol and a quantity of additional DMRS groups is less than 3; or it is determined that the mapping manner of the PDSCH is type-A, and the configuration manner of the DMRS includes that a front-loaded DMRS occupies one OFDM symbol, and a quantity of additional DMRS groups is equal to 3, it is determined that OFDM symbols numbered 0 to 2 belong to the first resource.

In a possible design, when the first indication information is determined based on the mapping manner of the PDSCH and the configuration manner of the DMRS, the first indication information is determined based on the mapping manner of the PDSCH being type-A, and the configuration manner of the DMRS includes that a front-loaded DMRS occupies two OFDM symbols, where the first indication information indicates whether a plurality of OFDM symbols belong to the first resource, and numbers of the plurality of OFDM symbols are respectively 8, 9, 10, and 11. Second indication information and third indication information are sent to the terminal device, where the second indication information indicates that the mapping manner of the PDSCH is type-A, and the third indication information indicates that the front-loaded DMRS occupies two OFDM symbols.

Signaling overheads of a bitmap can be reduced by using the foregoing design.

In a possible design, when it is determined that the mapping manner of the PDSCH is type-A, and the configuration manner of the DMRS includes that a front-loaded DMRS occupies two OFDM symbols, it is determined that OFDM symbols numbered 0 to 3 belong to the first resource.

In a possible design, the first indication information has two bits. One of the two bits indicates whether the OFDM symbols numbered 8 and 9 belong to the first resource, and the other one of the two bits indicates whether the OFDM symbols numbered 10 and 11 belong to the first resource.

In a possible design, the preset signal is the CRS or the SSB; and the first indication information includes information indicating a time-frequency resource location of the preset signal.

In a possible design, when the terminal device does not have a capability of receiving a broadcast message, the first indication information is carried in the first signal, and the second indication information and the third indication information are carried in the first signal.

In a possible design, when the terminal device is capable of receiving a broadcast message, the first indication information is carried in the first signal, a system message, radio resource control RRC signaling, or the broadcast message.

In a possible design, capability information is received from the terminal device, where the capability information indicates whether the terminal device is capable of receiving the broadcast message.

Whether the terminal device is capable of receiving the broadcast message can be learned by using the foregoing design.

In a possible design, the capability information is carried in a random access message or terminal device assistance information.

In a possible design, the frequency domain resource occupied by the first signal and the available time domain resource are not used for scheduling a signal that uses the following modulation scheme; and the modulation scheme is any one of 16QAM, 64QAM, 128QAM, 256QAM, and 1024QAM.

According to the foregoing design, a channel resource (for example, a PDSCH resource) on which NR uses high-order modulation is not multiplexed for the first signal, to avoid impact on an NR signal transmitted at a high order or high speed.

In a possible design, a signal that uses the following modulation scheme can be scheduled on the frequency domain resource occupied by the first signal and the available time domain resource; and the modulation scheme is QPSK or BPSK.

In a possible design, a value corresponding to an MCS of the signal is less than or equal to a preset value.

In a possible design, the first signal is a signal modulated through OOK or a signal modulated through FSK.

In a possible design, the first signal is generated by using an envelope modulation scheme, a modulation depth of envelope modulation in the envelope modulation scheme is ∇p. A value range of ∇p is 0 to 2P. P is average power of all resource elements in the frequency domain resource occupied by the first signal and the available time domain resource when the first signal is modulated, by using the envelope modulation scheme, in the frequency domain resource occupied by the first signal and the available time domain resource. The modulation depth is a power difference between an OOK ON symbol and an OOK OFF symbol, or the modulation depth is a power difference between a first frequency and a second frequency of the FSK.

In a possible implementation, total power of the OOK ON symbol is P, and total power of the OOK OFF symbol is 0.

In a possible implementation, total power of the OOK ON symbol is 2P, and total power of the OOK OFF symbol is 0.

In another possible implementation, total power of the OOK OFF symbol is not 0. For example, the total power of the OOK OFF symbol is 0.3P or 0.5P.

According to a second aspect, this application provides a signal transmission method. The method may be performed by a terminal device or a module (for example, a chip) used in the terminal device. The method includes: receiving first indication information from a network device, where the first indication information is used for determining a first resource; determining the first resource based on the first indication information, and determining a time domain resource available to a first signal based on the first resource; and receiving the first signal from the network device based on a frequency domain resource occupied by the first signal and the available time domain resource.

In a possible design, the first resource is a time domain resource occupied by a preset signal, a frequency domain resource occupied by the preset signal overlaps the frequency domain resource occupied by the first signal, and the preset signal includes at least one of an SSB, a DMRS, and a CRS.

In a possible design, the first resource is a time domain resource corresponding to at least one of a plurality of reserved time-frequency resource blocks, a time-frequency resource occupied by a preset signal overlaps at least one RE occupied by each of the at least one reserved time-frequency resource block, and the preset signal includes at least one of an SSB, a DMRS, and a CRS.

In a possible design, the first indication information includes at least two pieces of bitmap indication information, each bit in first bitmap indication information corresponds to a first time unit, each bit in second bitmap indication information corresponds to a second time unit, and the first bitmap indication information and the second bitmap indication information are any two of the at least two pieces of bitmap indication information.

In a possible design, the first indication information includes a first bitmap type and bitmap indication information corresponding to the first bitmap type, the first bitmap type is one of a plurality of preset bitmap types, and each of the plurality of preset bitmap types indicates numbers of a plurality of OFDM symbols.

In a possible design, numbers indicated by the first bitmap type include 6, 7, 9, and 11; or numbers indicated by the first bitmap type include 5, 6, 7, 8, and 9; or numbers indicated by the first bitmap type include 5, 6, 7, 8, 9, and 12; or numbers indicated by the first bitmap type include 8, 9, 10, and 11.

In a possible design, the preset signal is the DMRS; and the first indication information indicates whether a plurality of OFDM symbols belong to the first resource, and numbers of the plurality of OFDM symbols are respectively 6, 7, 9, and 11. Second indication information is received, where the second indication information indicates that a mapping manner of a PDSCH is type-A.

In a possible design, the preset signal is the DMRS; and the first indication information indicates whether a plurality of OFDM symbols belong to the first resource, and numbers of the plurality of OFDM symbols are respectively 5, 6, 7, 8, 9, and 12. Second indication information and third indication information are received, where the second indication information indicates that a mapping manner of a PDSCH is type-A, and the third indication information indicates that a quantity of additional DMRS groups is equal to 3.

In a possible design, it is determined, based on at least one of the first indication information, second indication information, and third indication information, that X OFDM symbols belong to the first resource. The X OFDM symbols correspond to numbers 0, 1, and 2, or the X OFDM symbols correspond to numbers 0, 1, 2, and 3.

In a possible design, when it is determined that the mapping manner of the PDSCH is type-A, and the configuration manner of the DMRS includes that a front-loaded DMRS occupies one OFDM symbol and a quantity of additional DMRS groups is less than 3; or it is determined that the mapping manner of the PDSCH is type-A, and the configuration manner of the DMRS includes that a front-loaded DMRS occupies one OFDM symbol, and a quantity of additional DMRS groups is equal to 3, it is determined that OFDM symbols numbered 0 to 2 belong to the first resource.

In a possible design, the preset signal is the DMRS; and the first indication information indicates whether a plurality of OFDM symbols belong to the first resource, and numbers of the plurality of OFDM symbols are respectively 8, 9, 10, and 11. Second indication information and third indication information are received, where the second indication information indicates that a mapping manner of a PDSCH is type-A, and the third indication information indicates that a front-loaded DMRS occupies two OFDM symbols.

In a possible design, the first indication information has two bits, one of the two bits indicates whether the OFDM symbols numbered 8 and 9 belong to the first resource, and the other one of the two bits indicates whether the OFDM symbols numbered 10 and 11 belong to the first resource.

In a possible design, when it is determined that the mapping manner of the PDSCH is type-A, and the configuration manner of the DMRS includes that a front-loaded DMRS occupies two OFDM symbols, it is determined that OFDM symbols numbered 0 to 3 belong to the first resource.

In a possible design, the preset signal is the CRS or the SSB; and the first indication information includes information indicating a time-frequency resource location of the preset signal.

In a possible design, the terminal device receives the first indication information or the first signal in a first state; and the terminal device receives the first signal in a second state.

In a possible design, when the terminal device does not have a capability of receiving a broadcast message, the first indication information is carried in the first signal, and the second indication information and the third indication information are carried in the first signal.

In a possible design, when the terminal device is capable of receiving a broadcast message, the first indication information is carried in the first signal, a system message, RRC signaling, or the broadcast message.

In a possible design, capability information of the terminal device is sent to the network device, where the capability information indicates whether the terminal device is capable of receiving the broadcast message.

In a possible design, the capability information is carried in a random access message or terminal device assistance information.

In a possible design, the frequency domain resource occupied by the first signal and the available time domain resource are not used for scheduling a signal that uses the following modulation scheme. The modulation scheme is any one of 16QAM, 64QAM, 128QAM, 256QAM, and 1024QAM.

In a possible design, a signal that uses the following modulation scheme can be scheduled on the frequency domain resource occupied by the first signal and the available time domain resource; and the modulation scheme is QPSK or BPSK.

In a possible design, a value corresponding to a modulation and coding scheme MCS of the signal is less than or equal to a preset value.

In a possible design, the first signal is a signal modulated through OOK and/or a signal modulated through FSK.

For technical effects of the second aspect, refer to corresponding technical effects of the first aspect.

According to a third aspect, this application further provides an apparatus. The apparatus may perform the foregoing method design. The apparatus may be a chip or a circuit that can perform the functions corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method in any one of the foregoing possible designs.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, separately configured to implement the steps in the foregoing method. The function may be implemented by hardware, or may be implemented by executing corresponding software by hardware. The hardware or the software includes one or more units that correspond to the foregoing functions.

According to a fourth aspect, this application provides a computer-readable storage medium. The computer-readable storage medium stores a computer program. When the computer program is run on an apparatus, the method in any one of the foregoing possible designs is performed.

According to a fifth aspect, this application provides a computer program product. The computer program product includes a computer program. When the computer program is run on an apparatus, the method in any one of the foregoing possible designs is performed.

According to a sixth aspect, this application provides a communication system. The communication system includes a network device and a terminal device. The network device performs the method in any possible design of the first aspect, and the terminal device performs the method in any possible design of the second aspect.

### BRIEF DESCRIPTION OF DRAWINGS

FIG. 1 shows a mapping manner of an OOK symbol in the background of this application;
FIG. 2 is a diagram of an architecture of a mobile communication system to which an embodiment of this application is applied;
FIG. 3A is a diagram of time division multiplexing according to this application;
FIG. 3B is a diagram of frequency division multiplexing according to this application;
FIG. 4 is an overview flowchart of a signal transmission method according to this application;
FIG. 5 is a diagram of determining an available reserved time-frequency resource block according to this application;
FIG. 6A is a diagram in which a bandwidth occupied by an OOK signal completely includes a bandwidth occupied by an SSB according to this application;
FIG. 6B is a diagram in which a bandwidth occupied by an OOK signal partially includes a bandwidth occupied by an SSB according to this application;
FIG. 7 is a diagram of time domain resource occupation according to this application;
FIG. 8 is a diagram of a configuration manner of a DMRS when a mapping manner of a PDSCH is type-A according to this application;
FIG. 9 is a diagram in which a bandwidth occupied by an OOK signal completely includes a bandwidth occupied by a CRS according to this application;
FIG. 10 is an overview flowchart of a communication method according to this application;
FIG. 11 is a diagram of a structure of a communication apparatus according to this application; and
FIG. 12 is a diagram of a structure of another communication apparatus according this application.

### DESCRIPTION OF EMBODIMENTS

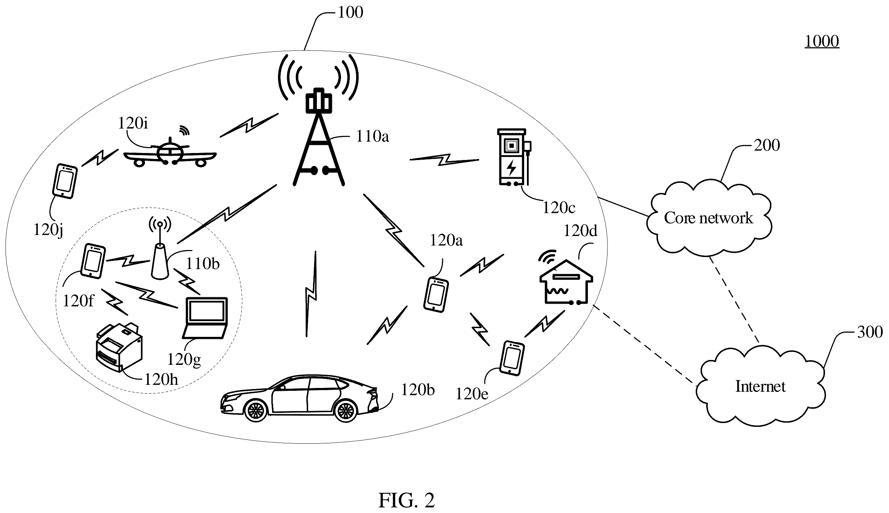

FIG. 2 is a diagram of an architecture of a communication system 1000 to which an embodiment of this application is applied. As shown in FIG. 2, the communication system includes a radio access network 100 and a core network 200. Optionally, the communication system 1000 may further include an internet 300. The radio access network 100 may include at least one radio access network device (for example, 110a and 110b in FIG. 2), and may further include at least one terminal (for example, 120a to 120j in FIG. 2). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 2 is merely a diagram. The communication system may further include other network devices, for example, may further include a wireless relay device and a wireless backhaul device, which are not shown in FIG. 2.

The radio access network device is an access device over which the terminal accesses the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5^{th} generation (5^{th} generation, 5G) mobile communication system, a next generation base station in a 6^{th} generation (6^{th} generation, 6G) mobile communication system, a base station in a future mobile communication system, or the like; or may be a module or a unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to technical specifications related to the 3^{rd} generation partnership project (3^{rd} generation partnership project, 3GPP). The radio access network device may be a macro base station (for example, 110a in FIG. 2), may be a micro base station or an indoor station (for example, 110b in FIG. 2), or may be a relay node, a donor node, or the like. A specific technology and a specific device form that are used by the radio access network device are not limited in embodiments of this application. For ease of description, a network device is used as an abbreviation of the radio access network device, and the base station is used as an example of the radio access network device.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device; or may be deployed on water; or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 2 may be configured as a mobile base station. For a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between the base stations. In this case, for 110a, 120i is also a base station. Therefore, both the base station and the terminal may be collectively referred to as communication apparatuses, 110a and 110b in FIG. 2 may be referred to as communication apparatuses having a base station function, and 120a to 120j in FIG. 2 may be referred to as communication apparatuses having a terminal function.

Communication between the base station and the terminal, between the base stations, or between the terminals may be performed over a licensed spectrum, or may be performed over an unlicensed spectrum, or may be performed over both the licensed spectrum and the unlicensed spectrum. The communication may be performed over a spectrum below 6 gigahertz (gigahertz, GHz), or may be performed over a spectrum above 6 GHz, or may be performed over both the spectrum below 6 GHz and the spectrum above 6 GHz. A spectrum resource used for wireless communication is not limited in embodiments of this application.

In embodiments of this application, functions of the base station may be performed by a module (for example, a chip) in the base station, or may be performed by a control subsystem including the function of the base station. The control subsystem including the function of the base station herein may be a control center in the foregoing application scenarios, such as the smart grid, the industrial control, the smart transportation, and the smart city. A function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

For ease of understanding of embodiments of this application, several basic concepts in embodiments of this application are briefly described.

An existing NR channel or signal is multiplexed for an OOK signal, and the following two possible manners may be specifically included: time division multiplexing and frequency division multiplexing.

### (1) Time division multiplexing

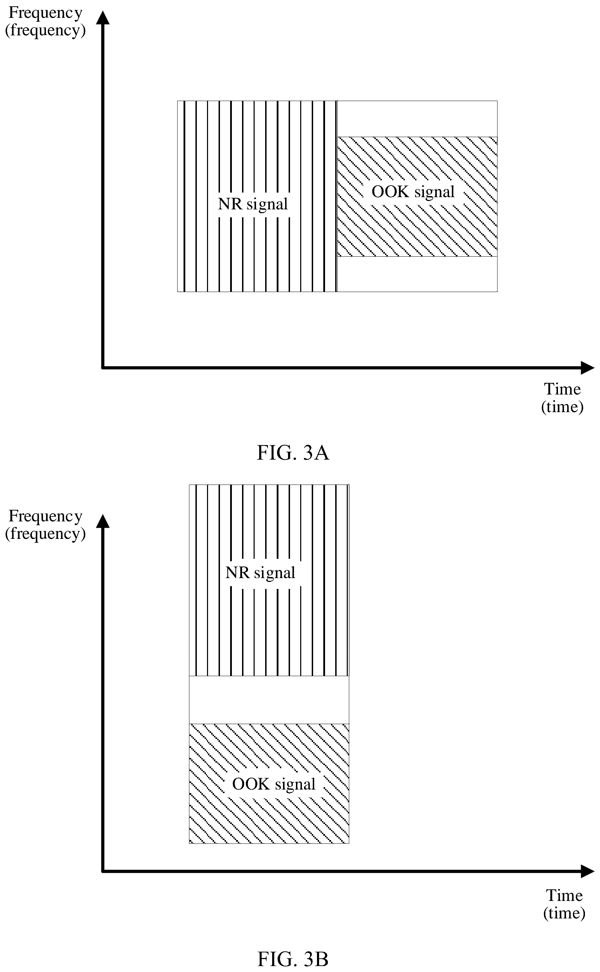

The time division multiplexing means that an NR signal and an OOK signal occupy different time domain resources. As shown in FIG. 3A, from the perspective of time domain, the NR signal and the OOK signal are mapped to different time domain resources. From the perspective of frequency domain, the NR signal and the OOK signal may occupy a same frequency domain resource, or may occupy different frequency domain resources.

### (2) Frequency division multiplexing

The frequency division multiplexing means that an NR signal and an OOK signal occupy different frequency resources or frequency channels. As shown in FIG. 3B, from the perspective of time domain, the NR signal and the OOK signal may occupy a same time domain resource, or may occupy different time domain resources. From the perspective of frequency domain, the NR signal and the OOK signal are mapped to different frequency domain resources or frequency channels.

In the foregoing two multiplexing manners, time-frequency resources need to be separately allocated to the OOK signal in both the time division multiplexing and the frequency division multiplexing, resulting in low network resource utilization. If sufficient guard bands are considered, it means that the NR signal and the OOK signal do not interfere with each other in both time domain and frequency domain. The OOK signal and the NR signal almost have no impact on reception performance of each other, but the network resource utilization is further reduced.

The OOK signal is a manner of carrying information by using high or low levels, signal amplitudes, or power. When a time domain waveform is at a high level or an amplitude of the time domain waveform is "1", the OOK signal indicates a bit 1; otherwise, the OOK signal indicates a bit 0. When the OOK signal indicates the bit 1, the OOK signal may also be referred to as an OOK ON symbol. When the OOK signal indicates the bit 0, the OOK signal may also be referred to as an OOK OFF symbol.

However, an NR constellation modulated signal is carried by using a single subcarrier. Therefore, it may be considered that the NR constellation modulated signal is multiplexed for the OOK ON symbol, to reduce network resource overheads. Different NR channels or signals have distinct designs and are not necessarily suitable to be multiplexed for the OOK ON symbol. OOK performance and NR performance in a multiplexing scenario need to be considered separately for multiplexing of the NR signal and the OOK signal.

### (1) Performance of the OOK signal

A possible manner of generating the OOK signal in an OFDM system is: mapping and occupying sequences with a same quantity of subcarriers in frequency domain, and then performing inverse fast Fourier transform (inverse fast Fourier transform, IFFT), to obtain a signal modulated through OOK. If an NR physical downlink shared channel (physical downlink shared channel, PDSCH) is multiplexed for the OOK ON symbol, a constellation point of an existing NR constellation modulation may be multiplexed for a frequency domain sequence.

For example, the frequency domain sequence of the OOK signal is randomly generated based on a quadrature phase shift keying (quadrature phase shift keying, QPSK) constellation point. Simulation verification shows that in a fading channel, performance of the OOK signal when the frequency domain sequence uses the QPSK constellation point is consistent with that when the frequency domain sequence uses a ZC sequence. Therefore, it may be concluded that it can be ensured, by multiplexing the existing NR signal, that the performance of the OOK signal is not poorer than performance of a dedicated sequence (for example, the ZC sequence).

### (2) Performance of the NR signal

The performance of the NR signal mainly refers to demodulation performance of the NR signal. After the NR signal is multiplexed for the OOK signal, a part that corresponds to the OOK OFF symbol and that is in the NR signal is punctured.

In an example, both a data part of the PDSCH and a demodulation reference signal (demodulation reference signal, DMRS) for the OOK OFF symbol are punctured.

In another example, an OFDM symbol occupied by a DMRS is avoided, and only a data part of the PDSCH channel for the OOK OFF symbol is punctured.

For the foregoing two examples, it can be learned from a simulation result that when the OOK signal is mapped, if the DMRS is avoided, NR transmission performance may be maintained to an extent; or if the DMRS is punctured, NR almost cannot be normally demodulated.

Therefore, some special designs need to be performed, to multiplex the existing NR signal for the OOK signal on the premise of ensuring the NR performance, so as to improve the network resource utilization.

Based on this, this application provides a signal transmission method, to multiplex an existing NR signal for an OOK signal on the premise of ensuring NR performance, so as to improve network resource utilization.

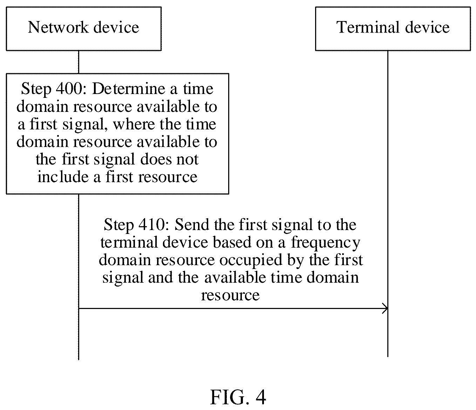

As shown in FIG. 4, the method includes the following steps.

Step 400: A network device determines a time domain resource available to a first signal, where the time domain resource available to the first signal does not include a first resource.

For example, the first resource is a time domain resource unavailable to the first signal.

In this application, the first signal may be referred to as an envelope modulation signal or a low-power modulation signal. For example, the first signal includes a signal modulated through OOK and/or a signal modulated through FSK.

For a specific manner in which the network device determines the first resource, refer to the following related descriptions.

Step 410: The network device sends the first signal to a terminal device based on a frequency domain resource occupied by the first signal and the available time domain resource. Correspondingly, the terminal device receives the first signal from the network device.

It may be understood that the network device may allocate a time-frequency resource to the first signal, and the time-frequency resource specifically includes a time domain resource and a frequency domain resource. The network device may first determine the first resource, and then determine an available time domain resource in the allocated time domain resource based on the first resource. The network device sends the first signal to the terminal device based on the allocated frequency domain resource and the available time domain resource. A specific manner in which the network device allocates the time-frequency resource to the first signal is not limited in this application.

In addition, optionally, before step 410, the network device may further send first indication information to the terminal device, where the first indication information is used for determining the first resource. Correspondingly, the terminal device receives the first indication information from the network device, and the terminal device may learn of the time-frequency resource allocated to the first signal. Further, the terminal device may determine the first resource based on the first indication information, determine the available time domain resource in the allocated time domain resource based on the first resource, and receive the first signal based on the allocated frequency domain resource and the available time domain resource. A specific manner in which the terminal device learns of the time-frequency resource allocated to the first signal is not limited in this application.

The following describes the specific manner in which the network device determines the first resource.

Manner 1: The first resource is a time domain resource occupied by a preset signal, a frequency domain resource occupied by the preset signal overlaps the frequency domain resource occupied by the first signal, and the preset signal includes at least one of a synchronization signal and physical broadcast channel block (synchronization signal and PBCH Block, SSB), a DMRS, and a cell-specific reference signal (cell-specific reference signal, CRS). It may be understood that the preset signal is merely an example, and is not intended to limit this application.

For example, that the frequency domain resource occupied by the preset signal overlaps the frequency domain resource occupied by the first signal may be understood as that the frequency domain resource occupied by the preset signal completely or partially overlaps the frequency domain resource occupied by the first signal. For example, an overlapping part of a time-frequency resource occupied by the preset signal and a time-frequency resource occupied by the first signal is at least one resource element (resource element, RE).

In a possible implementation, if the network device needs to send the first indication information, the first indication information may be used for determining the time domain resource occupied by the preset signal. For details, refer to the following related descriptions. In addition, the network device may further indicate the frequency domain resource occupied by the preset signal. A specific manner in which the network device indicates the time-frequency resource occupied by the preset signal is not limited in this application.

Manner 2: The first resource is a time domain resource corresponding to at least one of a plurality of reserved time-frequency resource blocks, a time-frequency resource occupied by a preset signal overlaps at least one RE occupied by each of the at least one reserved time-frequency resource block, and the preset signal includes at least one of an SSB, a DMRS, and a CRS. It may be understood that the preset signal is merely an example, and is not intended to limit this application.

In a possible implementation, the plurality of reserved time-frequency resource blocks may be generated by the network device by configuring a periodic time domain resource and/or a periodic frequency domain resource.

The plurality of reserved time-frequency resource blocks are time-frequency resource blocks allocated by the network device to the first signal. When any one of the plurality of reserved time-frequency resource blocks overlaps the time-frequency resource occupied by the preset signal, the reserved time-frequency resource block is a resource block unavailable to the first signal, in other words, a time domain resource corresponding to the reserved time-frequency resource block belongs to the first resource.

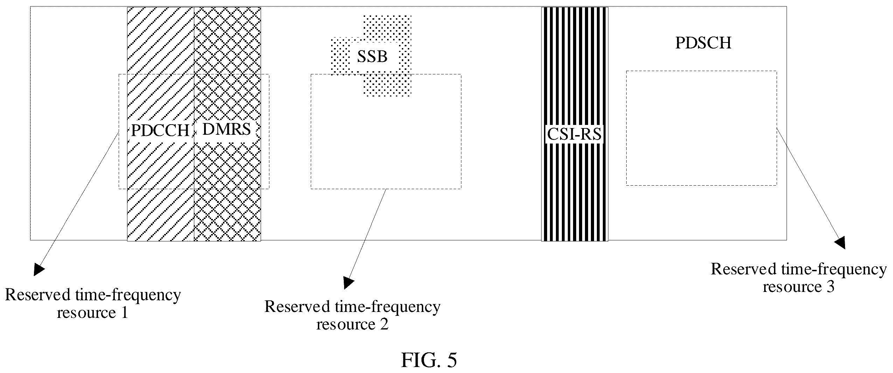

As shown in FIG. 5, a reserved time-frequency resource block 1 to a reserved time-frequency resource block 3 are reserved time-frequency resource blocks allocated by the network device to the first signal. If the reserved time-frequency resource block 1 overlaps a time-frequency resource occupied by the DMRS, and the reserved time-frequency resource block 2 overlaps a time-frequency resource occupied by the SSB, the first resource includes time domain resources respectively corresponding to the reserved time-frequency resource block 1 and the reserved time-frequency resource block 2, and only the reserved time-frequency resource block 3 is a reserved time-frequency resource block available to the first signal.

In a possible implementation, if the network device needs to send the first indication information, the first indication information may be used for determining a time domain resource occupied by the preset signal, so that the network device and the terminal device can determine the first resource based on the time domain resource occupied by the preset signal, a frequency domain resource occupied by the preset signal, and the plurality of reserved time-frequency resource blocks. For example, when the time-frequency resource occupied by the preset signal overlaps at least one RE occupied by any one of the reserved time-frequency resource blocks, a time domain resource corresponding to the reserved time-frequency resource block is the first resource. A specific manner in which the network device notifies the terminal device of time-frequency resource locations respectively corresponding to the plurality of reserved time-frequency resource blocks and a specific manner of notifying the terminal device of the frequency domain resource occupied by the preset signal are not limited in this application.

In a possible implementation, the network device may send the first indication information. The first indication information indicates a reserved time-frequency resource block unavailable to the first signal or a reserved time-frequency resource block available to the first signal.

Further, with reference to different scenarios of the preset signal, the following describes how the first indication information indicates the time domain resource occupied by the preset signal.

Scenario 1: The preset signal is the SSB.

If the time-frequency resource occupied by the SSB overlaps the time-frequency resource allocated by the network device to the first signal, NR initial access is greatly affected. Therefore, it is considered to avoid a time domain resource occupied by the SSB whose frequency domain resource overlaps the frequency domain resource allocated to the first signal.

If the frequency domain resource (for example, a bandwidth range) occupied by the first signal overlaps the frequency domain resource (for example, a bandwidth range) occupied by the SSB, the first resource is a part or all of the time domain resource occupied by the SSB.

The SSB occupies four OFDM symbols. An example in which the first signal is an OOK signal is used. The first resource may specifically include the following two cases:

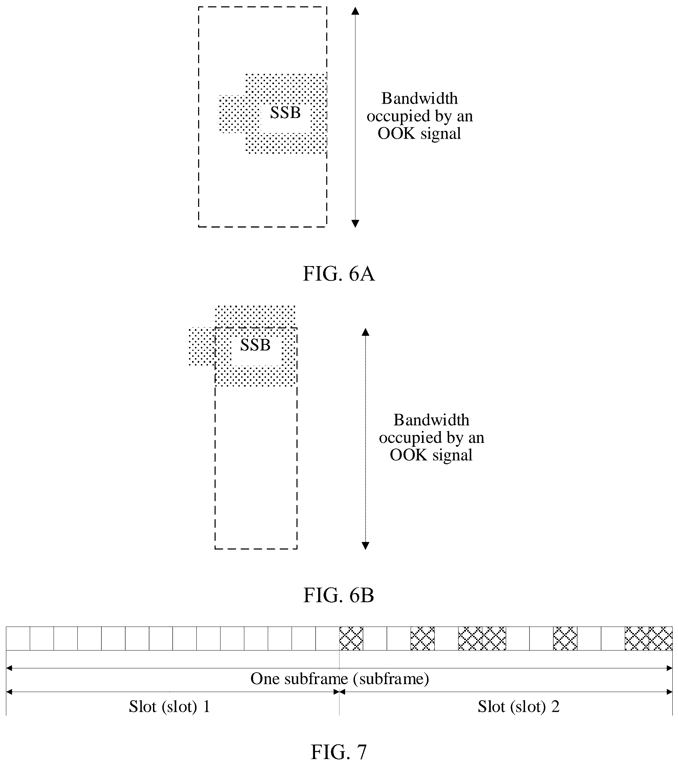

As shown in FIG. 6A, a bandwidth occupied by the OOK signal completely includes a bandwidth occupied by the SSB. In this case, the four OFDM symbols of the SSB belong to the first resource. In this case, the first resource is the four OFDM symbols that are completely occupied by the SSB.

As shown in FIG. 6B, a bandwidth occupied by the OOK signal partially includes a bandwidth occupied by the SSB. In this case, three OFDM symbols of the SSB belong to the first resource. In this case, the first resource is three of the four OFDM symbols occupied by the SSB.

In a possible implementation, for a terminal device that can receive a broadcast message, the terminal device may receive a system information block type 1 (System Information Block Type1, SIB1), and may determine a time-frequency resource location of the SSB based on a ssb-PositionsInBurst parameter in the SIB1. No additional signaling is required to notify the time-frequency resource location of the SSB, in other words, in this case, the first indication information does not need to be sent. Alternatively, it may be understood as that in this case, the SIB1 is the first indication information. For example, the terminal device that can receive the broadcast message is a WUR terminal. The WUR terminal may receive the broadcast message via a primary receiver.

For example, the terminal device may receive the first indication information (for example, the SIB1) or the first signal in a first state. The terminal device may also receive the first signal in a second state. The first state may be understood as a state in which the primary receiver is turned on, or a state in which both the primary receiver and a secondary receiver are turned on, and the second state may be understood as a state in which only the secondary receiver is turned on.

In a possible implementation, for a terminal device that cannot receive a broadcast message, additional signaling is required to notify a time-frequency resource location of the SSB. In this case, the network device needs to send the first indication information, where the first indication information indicates the time-frequency resource location of the SSB. For example, the terminal device that cannot receive the broadcast message is an ambient IoT terminal, and the ambient IoT terminal does not have a primary receiver and cannot receive a SIB1. Therefore, the time-frequency resource location of the SSB needs to be learned by using the first indication information.

The first indication information may indicate, by using but not limited to the following general manner 1 and general manner 2, the time domain resource occupied by the SSB. In addition, the following general manner 1 and general manner 2 are also applicable to indicating a time domain resource occupied by another preset signal (for example, the DMRS or the CRS).

General manner 1: The first indication information includes one piece of bitmap (bitmap) indication information. Each bit in the bitmap indication information corresponds to one OFDM symbol.

For example, as shown in FIG. 7, each slot (slot) includes 14 OFDM symbols. In this case, the bitmap indication information includes 28 bits, and each bit indicates whether one OFDM symbol is occupied by the preset signal.

Signaling overheads of the general manner 1 are large. To reduce the signaling overheads, this application proposes the general manner 2, to effectively reduce the signaling overheads.

General manner 2: The first indication information includes at least two pieces of bitmap indication information, each bit in first bitmap indication information corresponds to a first time unit, each bit in second bitmap indication information corresponds to a second time unit, and the first bitmap indication information and the second bitmap indication information are any two of the at least two pieces of bitmap indication information.

For example, the first time unit and the second time unit may be any two of a superframe, a frame, a slot, and a symbol. A quantity of the at least two pieces of bitmap indication information may be two, three, or a larger value. This is not limited in this application. The manner 2 may also be referred to as a multi-level nested bitmap configuration manner.

In a possible implementation, time units corresponding to the foregoing pieces of bitmap indication information are different from each other. Multi-level nesting means first configuring a superframe-level bitmap, a frame-level bitmap, a subframe-level bitmap, or a slot-level bitmap, and then configuring a symbol-level bitmap.

In another possible implementation, the first bitmap indication information may further indicate whether the second bitmap indication information is sent. For example, when the first bitmap indication information is 0 or is default, the second bitmap indication information is not configured or is default.

In an example, the first indication information includes two pieces of bitmap indication information, a first time unit is a slot, and a second time unit is an OFDM symbol.

As shown in FIG. 7, it is assumed that a value 1 of a bit indicates that a time domain resource is unavailable, in other words, the time domain resource is occupied; and a value 0 of the bit indicates that the time domain resource is available, in other words, the time domain resource is not occupied. A bitmap corresponding to 14 symbols in a slot 1 is 0, and it indicates that the slot 1 is not occupied, that is, only one bit indicates the 14 symbols in the slot 1. A bitmap corresponding to 14 symbols in a slot 2 is 110010110010011. A 1^{st} bit indicates that the slot 2 is occupied. In this case, the slot 2 is not necessarily occupied completely, and it indicates that there is an occupied OFDM symbol in the slot 2. A 2^{nd} bit to a 15^{th} bit indicate each OFDM symbol in the slot 2.

Still based on FIG. 7, compared with the manner 1 in which 28 bits are required to indicate resource occupation of two slots, in the foregoing example 1, only 16 bits are required to indicate resource occupation of two slots.

In another example, the first indication information includes three pieces of bitmap indication information, a first time unit is a subframe, a second time unit is a slot, and a third time unit is an OFDM symbol.

As shown in FIG. 7, it is assumed that a value 1 of a bit indicates that a time domain resource is unavailable, in other words, the time domain resource is occupied; and a value 0 of the bit indicates that the time domain resource is available, in other words, the time domain resource is not occupied. A bitmap corresponding to 14 symbols in a slot 1 is 10. A 1^{st} bit indicates that subframes in which the slot 1 and a slot 2 are located are occupied, and a 2^{nd} bit indicates that the slot 1 is not occupied. A bitmap corresponding to 14 symbols in the slot 2 is 1110010110010011. A 1^{st} bit indicates that subframes in which the slot 1 and the slot 2 are located are occupied, a 2^{nd} bit indicates that the slot 2 is occupied, and a 3^{rd} bit to a 16^{th} bit indicate each OFDM symbol in the slot 2.

Still based on FIG. 7, compared with the manner 1 in which 28 bits are required to indicate resource occupation of two slots, in the foregoing example 1, only 18 bits are required to indicate resource occupation of two slots.

In addition, when there is no load (for example, there is no conventional NR service) in a network, the time-frequency resource occupied by the SSB may be used for transmitting the first signal. In other words, in this case, the first resource does not include the time domain resource occupied by the SSB. When there is no load or service in the network, because no user accesses the network, the SSB being multiplexed for the first signal does not affect access performance of NR users.

In addition, it may be understood that time domain resources of another NR broadcast channel SIB1, other system information (other system information, OSI), and paging (Paging) are not used for sending the first signal.

In the scenario 1, when an NR signal is multiplexed for the first signal, the OFDM symbol occupied by the SSB may be avoided, and access performance for a user of the conventional NR service is not affected. When there is no load in the network, the time-frequency resource occupied by the SSB may also be used for transmitting the first signal, to improve network resource utilization.

Scenario 2: The preset signal is the DMRS.

During unicast or multicast scheduling, to avoid an excessive NR performance loss, the first signal needs to avoid a time domain resource occupied by the DMRS whose frequency domain resource overlaps a frequency domain resource occupied by the first signal.

If the frequency domain resource (for example, a bandwidth range) occupied by the first signal overlaps the frequency domain resource (for example, a bandwidth range) occupied by the DMRS, the first resource is the time domain resource occupied by the DMRS. The first resource herein is a part or all of the time domain resource occupied by the DMRS.

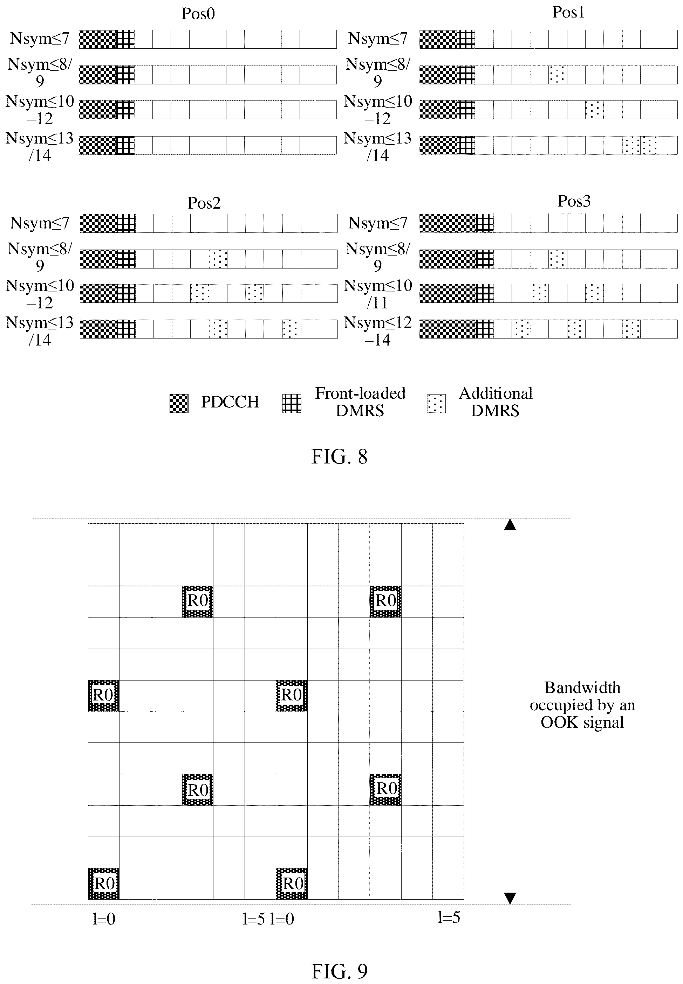

As shown in FIG. 8, when a mapping manner of a PDSCH is type-A (Type-A), possible OFDM symbol locations that respectively correspond to a PDCCH, a front-loaded DMRS, and an additional DMRS group are shown in FIG. 8. A configuration in FIG. 8 may be applied to the terminal device and the network device in a predefined manner or in another manner. This is not limited in this application. In FIG. 8, Pos0 indicates that a maximum quantity of additional DMRS groups is 0; Pos1 indicates that a maximum quantity of additional DMRS groups is 1; Pos2 indicates that a maximum quantity of additional DMRS groups is 2; and Pos3 indicates that a maximum quantity of additional DMRS groups is 3. Nsym indicates a quantity of symbols.

It can be learned from FIG. 8 that the first three or the first four OFDM symbols in one slot are fixedly occupied, and these OFDM symbols do not need to be indicated. The OFDM symbols are numbered from 0, and locations of OFDM symbols that may be occupied by the DMRS are {5, 6, 7, 8, 9, 10, 11, 12}.

Further, based on the mapping manner of the PDSCH and a configuration manner of the DMRS, a time domain resource location that may be occupied by the DMRS includes the following several cases.

Case A: The mapping manner of the PDSCH is type-A, and the configuration manner of the DMRS includes that the front-loaded DMRS occupies one OFDM symbol and a quantity of additional DMRS groups is less than 3.

The locations of the OFDM symbols that may be occupied by the DMRS are {6, 7, 9, 11}.

In case A, the first indication information includes four bits, the first indication information indicates whether a plurality of OFDM symbols belong to the first resource, and numbers of the plurality of OFDM symbols are 6, 7, 9, and 11.

Based on case A, in a possible implementation, for a terminal device that cannot receive a broadcast message, the network device sends the first indication information and second indication information to the terminal device. The second indication information indicates that the mapping manner of the PDSCH is type-A.

If the second indication information only indicates that the mapping manner of the PDSCH is type-A, the terminal device may determine, based on the second indication information, that the mapping manner of the PDSCH is type-A, and the configuration manner of the DMRS includes that the front-loaded DMRS occupies one OFDM symbol, and the quantity of additional DMRS groups is less than 3. Based on this, the terminal device may further determine, with reference to FIG. 8, that the numbers of the OFDM symbols respectively indicated by the four bits included in the first indication information are 6, 7, 9, and 11, to learn whether the OFDM symbols numbered 6, 7, 9, and 11 are occupied, that is, determine OFDM symbols belonging to the first resource in the OFDM symbols numbered 6, 7, 9, and 11.

For a terminal device that can receive a broadcast message, the network device only needs to send the first indication information to the terminal device. The terminal device may learn, by receiving the broadcast message, that the mapping manner of the PDSCH is type-A.

The terminal device may determine, based on the mapping manner of type-A of the PDSCH and the configuration manner of the DMRS that is not indicated, that the configuration manner of the DMRS includes that the front-loaded DMRS occupies one OFDM symbol, and the quantity of additional DMRS groups is less than 3. Further, the terminal device may determine, based on FIG. 8, that the numbers of the OFDM symbols respectively indicated by the four bits included in the first indication information are 6, 7, 9, and 11, to learn whether the OFDM symbols respectively numbered 6, 7, 9, and 11 are occupied.

Case B: The mapping manner of the PDSCH is type-A, and the configuration manner of the DMRS includes that the front-loaded DMRS occupies one OFDM symbol and a quantity of additional DMRS groups is equal to 3.

It should be noted that, in case B, a scenario in which the DMRS avoids the CRS needs to be considered. Specifically, when a number of an OFDM symbol occupied by the CRS is 11, a number of the OFDM symbol occupied by the DMRS is 12. When the number of the OFDM symbol occupied by the CRS is not 11, the number of the OFDM symbol occupied by the DMRS is 11. Therefore, the OFDM symbol numbered 11 is definitely occupied, and whether the OFDM symbol numbered 11 is occupied does not need to be indicated by using one bit. When learning of case B, the terminal device can determine, based on case B, that the OFDM symbol numbered 11 is definitely occupied, in other words, the OFDM symbol numbered 11 belongs to the first resource.

In case B, the first indication information includes six bits. The first indication information indicates whether a plurality of OFDM symbols belong to the first resource. In this case, numbers of the plurality of OFDM symbols are respectively 5, 6, 7, 8, 9, and 12.

For example, it is assumed that a value 1 of a bit indicates that an OFDM symbol is occupied, that is, the OFDM symbol belongs to the first resource; and a value 0 of the bit indicates that the OFDM symbol is not occupied, that is, the OFDM symbol does not belong to the first resource.

When a value of the last bit in the six bits included in the first indication information is 1, it indicates that the OFDM symbol numbered 12 is occupied. In this case, the number of the OFDM symbol occupied by the CRS is 11, and the number of the OFDM symbol occupied by the DMRS is 12.

For example, when a bitmap indicated by the first indication information is 101011, it indicates that the four OFDM symbols numbered 5, 7, 9, and 12 are occupied.

When a value of the last bit in the six bits included in the first indication information is 0, it indicates that the OFDM symbol numbered 12 is not occupied. In this case, the number of the OFDM symbol occupied by the DMRS is 11.

For example, when a bitmap indicated by the first indication information is 101010, it indicates that the three OFDM symbols numbered 5, 7, and 9 are occupied.

Based on case B, in a possible implementation, for a terminal device that cannot receive a broadcast message, the network device sends the first indication information, second indication information, and third indication information to the terminal device.

The second indication information indicates that the mapping manner of the PDSCH is type-A, and the third indication information indicates that the quantity of additional DMRS groups is equal to 3.

The terminal device may determine, based on the second indication information and the third indication information, that the mapping manner of the PDSCH is type-A, and the quantity of additional DMRS groups is equal to 3, to determine that the configuration manner of the DMRS includes that the front-loaded DMRS occupies one OFDM symbol, and the OFDM symbol numbered 11 is definitely occupied. Based on this, the terminal device may further determine, with reference to FIG. 8, that the numbers of the OFDM symbols respectively indicated by the six bits included in the first indication information are 5, 6, 7, 8, 9, and 12, to learn whether the OFDM symbols respectively numbered 5, 6, 7, 8, 9, and 12 are occupied.

For a terminal device that can receive a broadcast message, the network device only needs to send the first indication information to the terminal device, or the network device only needs to send the first indication information and third indication information to the terminal device.

When the network device sends the first indication information and the third indication information to the terminal device, the terminal device may learn, by receiving the broadcast message, that the mapping manner of the PDSCH is type-A.

When the network device sends the first indication information to the terminal device, the terminal device may learn, by receiving the broadcast message, that the mapping manner of the PDSCH is type-A, and the quantity of additional DMRS groups is equal to 3.

In this case, the terminal device may further determine, based on the mapping manner of the PDSCH being type-A, and the quantity of additional DMRS groups is equal to 3, that the front-loaded DMRS occupies one OFDM symbol, and the OFDM symbol numbered 11 is definitely occupied. Based on this, the terminal device may further determine, with reference to FIG. 8, that the numbers of the OFDM symbols respectively indicated by the six bits included in the first indication information are 5, 6, 7, 8, 9, and 12, to learn whether the OFDM symbols respectively numbered 5, 6, 7, 8, 9, and 12 are occupied.

In addition, for case A and case B, when the terminal device determines that the mapping manner of the PDSCH is type-A, and the configuration manner of the DMRS includes that the front-loaded DMRS occupies one OFDM symbol and the quantity of additional DMRS groups is less than 3 (that is, case A); or determines that the mapping manner of the PDSCH is type-A, and the configuration manner of the DMRS includes that the front-loaded DMRS occupies one OFDM symbol and the quantity of additional DMRS groups is equal to 3 (that is, case B), the network device and the terminal device may further determine that OFDM symbols numbered 0 to 2 are occupied, that is, the OFDM symbols numbered 0 to 2 belong to the first resource, as shown in FIG. 8.

Case C: The mapping manner of the PDSCH is type-A, and the configuration manner of the DMRS includes that the front-loaded DMRS occupies two OFDM symbols.

Numbers of the OFDM symbols that may be occupied by the DMRS are respectively 8, 9, 10, and 11.

In a possible implementation, the numbers of the OFDM symbols may be divided into two groups: 8 and 9, and 10 and 11. The OFDM symbols numbered 8 and 9 are occupied or not occupied at the same time. The OFDM symbols numbered 10 and 11 are occupied or not occupied at the same time.

For the foregoing implementation, the first indication information may include two bits, the first indication information indicates whether a plurality of OFDM symbols belong to the first resource, and numbers of the plurality of OFDM symbols are respectively 8, 9, 10, and 11. One of the two bits included in the first indication information may indicate whether the OFDM symbols numbered 8 and 9 belong to the first resource, and the other bit may indicate whether the OFDM symbols numbered 10 and 11 belong to the first resource.

In another possible implementation, one of the OFDM symbols numbered 8 and 9 is occupied, and the other one is not occupied. One of the OFDM symbols numbered 10 and 11 is occupied, and the other one is not occupied. In this case, two groups of to-be-indicated OFDM symbols are included in total, and an occupation relationship of each group of the to-be-indicated OFDM symbols may be that a former OFDM symbol is occupied or a latter OFDM symbol is occupied.

For the foregoing implementation, the first indication information may include two bits, the first indication information indicates whether a plurality of OFDM symbols belong to the first resource, and numbers of the plurality of OFDM symbols are respectively 8, 9, 10, and 11. One of the two bits included in the first indication information may indicate that the OFDM symbol numbered 8 or 9 belongs to the first resource, and the other bit may indicate that the OFDM symbol numbered 10 or 11 belongs to the first resource.

For example, it is assumed that a value 0 of a bit indicates that an OFDM symbol with a small number in each group of to-be-indicated OFDM symbols belongs to the first resource; and a value 1 of the bit indicates that an OFDM symbol with a large number in each group of to-be-indicated OFDM symbols belongs to the first resource. When a value of the first indication information is 10, it indicates that the OFDM symbol numbered 9 belongs to the first resource, and the OFDM symbol numbered 10 belongs to the first resource. The OFDM symbol numbered 9 is an OFDM symbol with a larger number in the OFDM symbol numbered 8 and the OFDM symbol numbered 9, and the OFDM symbol numbered 10 is an OFDM symbol with a smaller number in the OFDM symbol numbered 10 and the OFDM symbol numbered 11.

In addition, for the foregoing two possible implementations, the first indication information may alternatively include four bits, respectively indicating the numbers of the OFDM symbols: 8, 9, 10, and 11.

Based on case C, in a possible implementation, for a terminal device that cannot receive a broadcast message, the network device sends the first indication information, second indication information, and third indication information to the terminal device. The second indication information indicates that the mapping manner of the PDSCH is type-A, and the third indication information indicates that the front-loaded DMRS occupies two OFDM symbols.

The terminal device may determine, based on the second indication information and the third indication information, that the mapping manner of the PDSCH is type-A, and the configuration manner of the DMRS includes that the front-loaded DMRS occupies two OFDM symbols. Based on this, the terminal device may further determine, with reference to an existing DMRS-related configuration, that the numbers of the OFDM symbols indicated by the two bits or the four bits included in the first indication information are 8, 9, 10, and 11, to learn whether the OFDM symbols respectively numbered 8, 9, 10, and 11 are occupied.

For a terminal device that can receive a broadcast message, the network device only needs to send the first indication information to the terminal device. The terminal device may learn, by receiving the broadcast message, that the mapping manner of the PDSCH is type-A, and the front-loaded DMRS occupies two OFDM symbols. Based on this, the terminal device may further determine, with reference to an existing DMRS-related configuration, that the numbers of the OFDM symbols indicated by the two bits or the four bits included in the first indication information are 8, 9, 10, and 11, to learn whether the OFDM symbols respectively numbered 8, 9, 10, and 11 are occupied.

In addition, for case C, when the terminal device determines that the mapping manner of the PDSCH is type-A, and the configuration manner of the DMRS includes that the front-loaded DMRS occupies two OFDM symbols (that is, case C), the network device and the terminal device may further determine that OFDM symbols numbered 0 to 3 are occupied, in other words, the OFDM symbols numbered 0 to 3 belong to the first resource.

Table 1 shows a comparison between case A, case B, and case C.

**Table 1**

| PDSCH mapping manner | DMRS configuration manner | Fixedly occupied symbol | Numbers of OFDM symbols that may be occupied by the DMRS |
|---|---|---|---|
| Type-A | A front-loaded DMRS occupies one OFDM symbol, and a quantity of additional DMRS groups is less than 3. | 3 | {6, 7, 9, 11} |
| Type-A | A front-loaded DMRS occupies one OFDM symbol, and a quantity of additional DMRS groups is equal to 3. | 4 | {5, 6, 7, 8, 9, 12} |
| Type-A | A front-loaded DMRS occupies two OFDM symbols. | 4 | {8, 9, 10, 11} |

In addition, for another case, for example, when the mapping manner of the PDSCH is type-B, the network device may indicate, by using the general manner 1 or the general manner 2, the time domain resource occupied by the DMRS.

For case A, case B, and case C, in another possible implementation, the network device configures, for the terminal device, a plurality of preset bitmap types and numbers of a plurality of OFDM symbols indicated by each preset bitmap type. The preset bitmap type may also be referred to as an index of the preset bitmap type. For example, numbers indicated by the plurality of preset bitmap types include one or more of 6, 7, 9, and 11; 5, 6, 7, 8, and 9; 5, 6, 7, 8, 9, and 12; or 8, 9, 10, and 11.

It should be noted that, Table 2 is used as an example. With reference to the foregoing content, when the preset bitmap type is 1 or 2, corresponding to case B, the OFDM symbol numbered 11 is definitely occupied. Therefore, the terminal device may be notified, in a pre-configuration manner or another manner, that when the preset bitmap type is 1 or 2, the OFDM symbol numbered 11 is occupied, and the OFDM symbol corresponding to the number 11 is no longer indicated by using specific bitmap indication information.

In addition, when the preset bitmap type is 0, 1, or 2, corresponding to case A or case B, the OFDM symbols numbered 0 to 2 are occupied; and when the preset bitmap type is 3, corresponding to case C, the OFDM symbols numbered 0 to 3 are occupied. Therefore, the terminal device may be notified of the foregoing content in a pre-configuration manner or another manner, and the OFDM symbol corresponding to the number is no longer indicated by using specific bitmap indication information.

Only a sequence of the preset bitmap types in Table 2 is used herein as an example for description. In addition, the sequence of the preset bitmap types in Table 2 may further change. This is not limited in this application. When the sequence of the preset bitmap types in Table 2 changes, based on the same concept, for the preset bitmap type corresponding to case A, the terminal device needs to be notified that the OFDM symbols corresponding to numbers 0, 1, and 2 are occupied; for the two preset bitmap types corresponding to case B, the terminal device needs to be notified that the OFDM symbols corresponding to numbers 0, 1, 2, and 11 are occupied; and for the preset bitmap type corresponding to case C, the terminal device needs to be notified that the OFDM symbols corresponding to numbers 0, 1, 2, 3, and 11 are occupied.

For example, as shown in Table 2, Table 2 includes four preset bitmap types, numbers indicated by each bitmap type, a corresponding mapping manner of the PDSCH, a corresponding mapping manner of the DMRS, and whether to avoid the CRS.

**Table 2**

| Preset bitmap type | PDSCH mapping manner | DMRS configuration manner | Whether to avoid a CRS | Numbers indicated by a bitmap type |
|---|---|---|---|---|
| 0 | Type-A | A front-loaded DMRS occupies one OFDM symbol, and a quantity of additional DMRS groups is less than 3. | / | {6, 7, 9, 11} |
| 1 | Type-A | A front-loaded DMRS occupies one OFDM symbol, and a quantity of additional DMRS groups is equal to 3. | No | {5, 6, 7, 8, 9} |
| 2 | Type-A | A front-loaded DMRS occupies one OFDM symbol, and a quantity of additional DMRS groups is equal to 3. | Yes | {5, 6, 7, 8, 9, 12} |
| 3 | Type-A | A front-loaded DMRS occupies two OFDM symbols. | / | {8, 9, 10, 11} |

In this case, regardless of whether the terminal device can receive the broadcast message, the network device needs to send the first indication information to the terminal device. The first indication information includes a first bitmap type and bitmap indication information corresponding to the first bitmap type. The first bitmap type is one of the plurality of preset bitmap types. For example, the first bitmap type may be any value in a 1^{st} column in Table 1. The network device may determine a value from the 1^{st} column in Table 1 based on the mapping manner of the PDSCH, the configuration manner of the DMRS, and whether to avoid the CRS.

For example, if the network device determines that the mapping manner of the PDSCH is type-A, and the configuration manner of the DMRS includes that the front-loaded DMRS occupies two OFDM symbols, the network device determines, based on Table 1, that the preset bitmap type included in the first indication information is 3. Bitmap indication information corresponding to the preset bitmap type includes two bits, one of the two bits indicates whether the OFDM symbols numbered 8 and 9 belong to the first resource, and the other bit of the two bits indicates whether the OFDM symbols numbered 10 and 11 belong to the first resource.

Signaling overheads of a bitmap can be effectively reduced by using the foregoing design.

In the scenario 2, when an NR signal is multiplexed for the first signal, the OFDM symbol occupied by the DMRS may be avoided, and reception performance or detection performance for a user of a conventional NR service is not affected. The user of the conventional service includes an enhanced mobile broadband (enhanced mobile broadband, eMBB) user, a RedCap user, or the like.

Scenario 3: The preset signal is the CRS.

Because a low-power terminal may also be deployed on a frequency band shared with long term evolution (long term evolution, LTE), the first signal needs to avoid a time domain resource occupied by the CRS whose frequency domain resource overlaps the frequency domain resource occupied by the first signal.

If the frequency domain resource (for example, a bandwidth range) occupied by the first signal overlaps the frequency domain resource (for example, a bandwidth range) occupied by the CRS, the first resource is the time domain resource occupied by the CRS. The first resource herein is a part or all of the time domain resource occupied by the CRS.

In a possible implementation, for a terminal device that can receive a broadcast message, the terminal device may obtain, by using the broadcast message, bitmap indication information configured at an RE granularity. As shown in FIG. 9, a bandwidth occupied by an OOK signal completely includes a bandwidth occupied by the CRS, and a highlighted RE grid represents a time-frequency resource location occupied by the CRS. The terminal device may determine, based on the bitmap indication information configured at the RE granularity, the time-frequency resource location occupied by the CRS. No additional signaling is required to notify the time-frequency resource location occupied by the CRS, in other words, in this case, the first indication information does not need to be sent. Alternatively, it may be understood as that in this case, the broadcast message is the first indication information.

For example, the terminal device may receive the first indication information (for example, the broadcast message) or the first signal in a first state. The terminal device may also receive the first signal in a second state. For content of the first state and the second state, refer to the foregoing content. Details are not described herein again.

In a possible implementation, for a terminal device that cannot receive a broadcast message, additional signaling is required to notify a time-frequency resource location occupied by the CRS. In this case, the network device needs to send the first indication information, where the first indication information indicates the time-frequency resource location occupied by the CRS. The first indication information may indicate, by using but not limited to the general manner 1 and the general manner 2, the time-frequency resource location occupied by the CRS.

In the scenario 3, when an NR signal is multiplexed for the first signal, an OFDM symbol occupied by the CRS also needs to be avoided, and measurement performance for a user of a conventional LTE service is not affected.

For the first signal, the following several points need to be further described.
1. A frequency domain resource occupied by the first signal and an available time domain resource are not used for scheduling a signal that uses the following modulation scheme; and the modulation scheme is any one of 16 quadrature amplitude modulation (quadrature amplitude modulation, QAM), 64QAM, 128QAM, 256QAM, and 1024QAM.

It may also be described as follows: When a PDSCH uses any one of the foregoing modulation schemes, a time-frequency resource occupied by the PDSCH is a time-frequency resource unavailable to the first signal, and a time domain resource occupied by the PDSCH is a first resource.

It may also be described as follows: A time-frequency resource occupied by a PDSCH corresponding to an MCS corresponding to any one of the foregoing modulation schemes is a time-frequency resource unavailable to the first signal, and a time domain resource occupied by the PDSCH is a first resource.

It may be understood that the PDSCH may be alternatively replaced with another channel, for example, a PDCCH, another physical control channel, or another physical shared channel. This is not limited in this application.

2. A signal that uses the following modulation scheme can be scheduled on a frequency domain resource occupied by the first signal and an available time domain resource; and the modulation scheme is QPSK or binary phase shift keying (binary phase shift keying, BPSK). A value corresponding to a modulation and coding scheme (modulation and coding scheme, MCS) of the signal is less than or equal to a preset value. For example, the MCS of the signal may be equal to 0.

Based on the foregoing two points, a channel resource (for example, a PDSCH resource) on which NR uses high-order modulation is not multiplexed for the first signal, to avoid impact on an NR signal transmitted at a high order or high speed.

3. A network device may send the first signal on a dedicated time-frequency resource.

For example, when the network device sends downlink data via the first signal, an existing NR signal may be multiplexed for the first signal. For details, refer to the embodiment shown in FIG. 4. When the network device sends control signaling via the first signal, the existing NR signal may not be multiplexed for the first signal. For example, the network device may send the first signal by using the dedicated time-frequency resource, to ensure transmission performance of the control signaling.

In the foregoing design, it is considered that the first signal avoids an OFDM symbol occupied by a preset signal, to ensure that NR performance is not affected. Further, the available time domain resource is determined based on an OFDM symbol (that is, the first resource) that needs to be avoided, so that a time-frequency resource of the existing NR signal can be multiplexed to send the first signal, thereby improving network resource utilization.

This application further provides a communication method, to determine, based on whether a terminal device can receive a broadcast message, a carrying manner of sending downlink information by a network device.

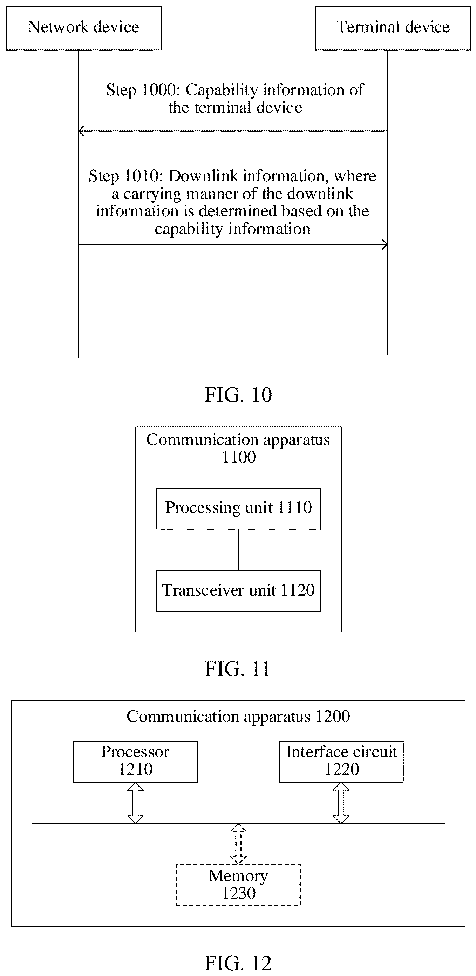

As shown in FIG. 10, the method includes the following steps.

Step 1000: The terminal device sends capability information of the terminal device to the network device, where the capability information indicates whether the terminal device is capable of receiving the broadcast message.

In a possible implementation, the capability information is carried in a random access message or terminal device assistance information.

The random access message may be a conventional NR message 1 (Msg1), a message 3 (Msg3), or a newly defined access message that uses low-power modulation. The capability information may be explicitly indicated, or may be implicitly indicated based on a type of the terminal device. For example, when the type is an ambient IoT, it indicates that the terminal device is incapable of receiving the broadcast message; or when the type is a WUR, it indicates that the terminal device is capable of receiving the broadcast message.

Step 1010: The network device sends the downlink information to the terminal device, where the carrying manner of the downlink information is determined based on the capability information.

In a possible design, when the capability information indicates that the terminal device is capable of receiving the broadcast message, the network device may send the downlink information by using a system message, RRC signaling, a first signal, or the broadcast message.

In a possible design, when the capability information indicates that the terminal device is incapable of receiving the broadcast message, the network device may send the downlink information via the first signal.

For detailed descriptions of the first signal, refer to related content in the embodiment shown in FIG. 4. Details are not described herein again.

In a possible implementation, the first signal is generated by using a low-power modulation scheme or an envelope modulation scheme. The low-power modulation scheme or the envelope modulation scheme may be at least one of OOK modulation or FSK modulation.

In a possible implementation, the network device may send the first signal on a dedicated time-frequency resource.

When the network device sends the downlink information via the first signal, if the downlink information is used for transmitting downlink data, an existing NR signal may be multiplexed for the first signal. For details, refer to the embodiment shown in FIG. 4. If the downlink information is used for transmitting control signaling, the existing NR signal is not multiplexed for the first signal, and the first signal may be sent by using the dedicated time-frequency resource, to ensure transmission performance of the control signal.

With reference to the embodiment shown in FIG. 4, when the terminal device is incapable of receiving the broadcast message, first indication information is carried in the first signal, and second indication information and/or third indication information are/is also carried in the first signal.

When the terminal device is capable of receiving the broadcast message, first indication information may be carried in the first signal, the system message, the RRC signaling, or the broadcast message.

In a possible implementation, when the terminal device is incapable of receiving the broadcast message, the network device notifies, via the first signal, the terminal device of both a location of a time-frequency resource unavailable to a broadcast first signal and a location of a time-frequency resource unavailable to a unicast/multicast first signal.

In a possible implementation, when the terminal device is capable of receiving the broadcast message, a location of a time-frequency resource unavailable to a broadcast first signal may not be notified, and a time-frequency resource unavailable to a unicast/multicast first signal is notified to the terminal device by using the system message, the RRC signaling, or the first signal.

It may be understood that to implement functions in the foregoing embodiments, the base station and the terminal include corresponding hardware structures and/or software modules for performing various functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

FIG. 11 and FIG. 12 are diagrams of structures of possible communication apparatuses according to embodiments of this application. These communication apparatuses may be configured to implement the function of the terminal or the base station in the foregoing method embodiments, and therefore can also achieve beneficial effects of the foregoing method embodiments. In embodiments of this application, the communication apparatus may be one of the terminals 120a to 120j shown in FIG. 2, or may be the base station 110a or 110b shown in FIG. 1, or may be a module (for example, a chip) used in the terminal or the base station.

As shown in FIG. 11, the communication apparatus 1100 includes a processing unit 1110 and a transceiver unit 1120. The communication apparatus 1100 is configured to implement the function of the terminal or the base station in the method embodiment shown in FIG. 4.

When the communication apparatus 1100 is configured to implement the function of the terminal in the method embodiment shown in FIG. 4,
the processing unit 1110 is configured to determine a time domain resource available to a first signal, where the time domain resource available to the first signal does not include a first resource; and
the transceiver unit 1120 is configured to send the first signal to a terminal device based on a frequency domain resource occupied by the first signal and the available time domain resource.

In a possible design, the first resource is a time domain resource occupied by a preset signal, a frequency domain resource occupied by the preset signal overlaps the frequency domain resource occupied by the first signal, and the preset signal includes at least one of an SSB, a DMRS, and a CRS.

In a possible design, the first resource is a time domain resource corresponding to at least one of a plurality of reserved time-frequency resource blocks, a time-frequency resource occupied by a preset signal overlaps at least one resource element RE occupied by each of the at least one reserved time-frequency resource block, and the preset signal includes at least one of an SSB, a DMRS, and a CRS.

In a possible design, the transceiver unit 1120 is configured to send first indication information to the terminal device, where the first indication information is used for determining the first resource.

In a possible design, the first indication information includes at least two pieces of bitmap indication information, each bit in first bitmap indication information corresponds to a first time unit, each bit in second bitmap indication information corresponds to a second time unit, and the first bitmap indication information and the second bitmap indication information are any two of the at least two pieces of bitmap indication information.

In a possible design, the first indication information includes a first bitmap type and bitmap indication information corresponding to the first bitmap type, the first bitmap type is one of a plurality of preset bitmap types, and each of the plurality of preset bitmap types indicates numbers of a plurality of orthogonal frequency division multiplexing OFDM symbols.

In a possible design, numbers indicated by the first bitmap type include 6, 7, 9, and 11; or numbers indicated by the first bitmap type include 5, 6, 7, 8, and 9; or numbers indicated by the first bitmap type include 5, 6, 7, 8, 9, and 12; or numbers indicated by the first bitmap type include 8, 9, 10, and 11.

In a possible design, the preset signal is the DMRS; and the processing unit 1110 is configured to determine the first indication information based on a mapping manner of a physical downlink shared channel PDSCH and a configuration manner of the DMRS.

In a possible design, the processing unit 1110 is configured to: when the first indication information is determined based on the mapping manner of the physical downlink shared channel PDSCH and the configuration manner of the DMRS, determine the first indication information based on the mapping manner of the PDSCH being type-A, and the configuration manner of the DMRS includes that a front-loaded DMRS occupies one OFDM symbol and a quantity of additional DMRS groups is less than 3, where the first indication information indicates whether a plurality of OFDM symbols belong to the first resource, and numbers of the plurality of OFDM symbols are respectively 6, 7, 9, and 11. The transceiver unit 1120 is configured to send second indication information to the terminal device, where the second indication information indicates that the mapping manner of the PDSCH is type-A.

In a possible design, the processing unit 1110 is configured to: when the first indication information is determined based on the mapping manner of the physical downlink shared channel PDSCH and the configuration manner of the DMRS, determine the first indication information based on the mapping manner of the PDSCH being type-A, and the configuration manner of the DMRS includes that a front-loaded DMRS occupies one OFDM symbol and a quantity of additional DMRS groups is equal to 3, where the first indication information indicates whether a plurality of OFDM symbols belong to the first resource, and numbers of the plurality of OFDM symbols are respectively 5, 6, 7, 8, 9, and 12. The transceiver unit 1120 is configured to send second indication information and third indication information to the terminal device, where the second indication information indicates that the mapping manner of the PDSCH is type-A, and the third indication information indicates that the quantity of additional DMRS groups is equal to 3.

In a possible design, the processing unit 1110 is configured to: when the first indication information is determined based on the mapping manner of the physical downlink shared channel PDSCH and the configuration manner of the DMRS, determine the first indication information based on the mapping manner of the PDSCH being type-A, and the configuration manner of the DMRS includes that a front-loaded DMRS occupies two OFDM symbols, where the first indication information indicates whether a plurality of OFDM symbols belong to the first resource, and numbers of the plurality of OFDM symbols are respectively 8, 9, 10, and 11. The transceiver unit 1120 is configured to send second indication information and third indication information to the terminal device, where the second indication information indicates that the mapping manner of the PDSCH is type-A, and the third indication information indicates that the front-loaded DMRS occupies two OFDM symbols.

In a possible design, the transceiver unit 1120 is configured to receive capability information from the terminal device, where the capability information indicates whether the terminal device is capable of receiving a broadcast message.

When the communication apparatus 1100 is configured to implement the function of the base station in the method embodiment shown in FIG. 4, the transceiver unit 1120 is configured to receive first indication information from a network device, where the first indication information is used for determining a first resource; the processing unit 1110 is configured to determine the first resource based on the first indication information, and determine, based on the first resource, a time domain resource available to a first signal; and the transceiver unit 1120 is configured to receive the first signal from the network device based on a frequency domain resource occupied by the first signal and the available time domain resource.

In a possible design, the first resource is a time domain resource occupied by a preset signal, a frequency domain resource occupied by the preset signal overlaps the frequency domain resource occupied by the first signal, and the preset signal includes at least one of an SSB, a DMRS, and a CRS.

In a possible design, the first resource is a time domain resource corresponding to at least one of a plurality of reserved time-frequency resource blocks, a time-frequency resource occupied by a preset signal overlaps at least one resource element RE occupied by each of the at least one reserved time-frequency resource block, and the preset signal includes at least one of an SSB, a DMRS, and a CRS.

In a possible design, the first indication information includes at least two pieces of bitmap indication information, each bit in first bitmap indication information corresponds to a first time unit, each bit in second bitmap indication information corresponds to a second time unit, and the first bitmap indication information and the second bitmap indication information are any two of the at least two pieces of bitmap indication information.

In a possible design, the first indication information includes a first bitmap type and bitmap indication information corresponding to the first bitmap type, the first bitmap type is one of a plurality of preset bitmap types, and each of the plurality of preset bitmap types indicates numbers of a plurality of orthogonal frequency division multiplexing OFDM symbols.

In a possible design, numbers indicated by the first bitmap type include 6, 7, 9, and 11; or numbers indicated by the first bitmap type include 5, 6, 7, 8, and 9; or numbers indicated by the first bitmap type include 5, 6, 7, 8, 9, and 12; or numbers indicated by the first bitmap type include 8, 9, 10, and 11.

In a possible design, the preset signal is the DMRS; and the first indication information indicates whether a plurality of OFDM symbols belong to the first resource, and numbers of the plurality of OFDM symbols are respectively 6, 7, 9, and 11. Second indication information is received, where the second indication information indicates that a mapping manner of a PDSCH is type-A.

In a possible design, the preset signal is the DMRS; and the first indication information indicates whether a plurality of OFDM symbols belong to the first resource, and numbers of the plurality of OFDM symbols are respectively 5, 6, 7, 8, 9, and 12. The transceiver unit 1120 is configured to receive second indication information and third indication information, where the second indication information indicates that a mapping manner of a PDSCH is type-A, and the third indication information indicates that a quantity of additional DMRS groups is equal to 3.

In a possible design, the preset signal is the DMRS; and the first indication information indicates whether a plurality of OFDM symbols belong to the first resource, and numbers of the plurality of OFDM symbols are respectively 8, 9, 10, and 11. The transceiver unit 1120 is configured to receive second indication information and third indication information, where the second indication information indicates that a mapping manner of a PDSCH is type-A, and the third indication information indicates that a front-loaded DMRS occupies two OFDM symbols.

In a possible design, the transceiver unit 1120 is configured to: receive the first indication information or the first signal in a first state; and receive the first signal in a second state.

In a possible design, the transceiver unit 1120 is configured to send capability information of the terminal device to the network device, where the capability information indicates whether the terminal device is capable of receiving a broadcast message.

For more detailed descriptions of the processing unit 1110 and the transceiver unit 1120, refer to related descriptions in the method embodiment shown in FIG. 4.

As shown in FIG. 12, the communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to store instructions executed by the processor 1210, store input data required by the processor 1210 to run instructions, or store data generated after the processor 1210 runs instructions.

When the communication apparatus 1200 is configured to implement the method shown in FIG. 4, the processor 1210 is configured to implement the functions of the processing unit 1110, and the interface circuit 1220 is configured to implement the functions of the transceiver unit 1120.

When the communication apparatus is a chip used in a terminal, the chip in the terminal implements the functions of the terminal in the foregoing method embodiments. The chip in the terminal receives, via another module (for example, a radio frequency module or an antenna) in the terminal, information sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements the functions of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip of the base station, may be a CU, a DU, or another module, or may be an apparatus in an open radio access network (open radio access network, O-RAN) architecture, for example, an apparatus like an open CU or an open DU.

It can be understood that the processor in embodiments of this application may be a central processing unit (Central Processing Unit, CPU), or may be another general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor, or may be any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may exist in a base station or terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, all or some of procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A signal transmission method, wherein the method comprises:
determining a time domain resource available to a first signal, wherein the time domain resource available to the first signal does not comprise a first resource; and
sending the first signal to a terminal device based on a frequency domain resource occupied by the first signal and the available time domain resource.

2. The method according to claim 1, wherein the first resource is a time domain resource occupied by a preset signal, a frequency domain resource occupied by the preset signal overlaps the frequency domain resource occupied by the first signal, and the preset signal comprises at least one of a synchronization signal and physical broadcast channel block SSB, a demodulation reference signal DMRS, and a cell-specific reference signal CRS.

3. The method according to claim 1, wherein the first resource is a time domain resource corresponding to at least one of a plurality of reserved time-frequency resource blocks, a time-frequency resource occupied by the preset signal overlaps at least one resource element RE occupied by each of the at least one reserved time-frequency resource block, and the preset signal comprises at least one of an SSB, a DMRS, and a CRS.

4. The method according to any one of claims 1 to 3, further comprising:
sending first indication information to the terminal device, wherein the first indication information is used for determining the first resource.

5. The method according to claim 4, wherein the first indication information comprises at least two pieces of bitmap indication information, each bit in first bitmap indication information corresponds to a first time unit, each bit in second bitmap indication information corresponds to a second time unit, and the first bitmap indication information and the second bitmap indication information are any two of the at least two pieces of bitmap indication information.

6. The method according to claim 4, wherein the first indication information comprises a first bitmap type and bitmap indication information corresponding to the first bitmap type, the first bitmap type is one of a plurality of preset bitmap types, and each of the plurality of preset bitmap types indicates numbers of a plurality of orthogonal frequency division multiplexing OFDM symbols.

7. The method according to claim 6, wherein numbers indicated by the first bitmap type comprise 6, 7, 9, and 11; or
numbers indicated by the first bitmap type comprise 5, 6, 7, 8, and 9; or
numbers indicated by the first bitmap type comprise 5, 6, 7, 8, 9, and 12; or
numbers indicated by the first bitmap type comprise 8, 9, 10, and 11.

8. The method according to claim 4, wherein the preset signal is the DMRS; and
the method further comprises:
determining the first indication information based on a mapping manner of a physical downlink shared channel PDSCH and a configuration manner of the DMRS.

9. The method according to claim 8, wherein determining the first indication information based on the mapping manner of the physical downlink shared channel PDSCH and the configuration manner of the DMRS comprises:
determining the first indication information based on the mapping manner of the PDSCH being type-A, and the configuration manner of the DMRS comprises that a front-loaded DMRS occupies one OFDM symbol and a quantity of additional DMRS groups is less than 3, wherein the first indication information indicates whether a plurality of OFDM symbols belong to the first resource, and numbers of the plurality of OFDM symbols are respectively 6, 7, 9, and 11; and
the method further comprises:
sending second indication information to the terminal device, wherein the second indication information indicates that the mapping manner of the PDSCH is type-A.

10. The method according to claim 8, wherein determining the first indication information based on the mapping manner of the physical downlink shared channel PDSCH and the configuration manner of the DMRS comprises:
determining the first indication information based on the mapping manner of the PDSCH being type-A, and the configuration manner of the DMRS comprises that a front-loaded DMRS occupies one OFDM symbol and a quantity of additional DMRS groups is equal to 3, wherein the first indication information indicates whether a plurality of OFDM symbols belong to the first resource, and numbers of the plurality of OFDM symbols are respectively 5, 6, 7, 8, 9, and 12; and
the method further comprises:
sending second indication information and third indication information to the terminal device, wherein the second indication information indicates that the mapping manner of the PDSCH is type-A, and the third indication information indicates that the quantity of additional DMRS groups is equal to 3.

11. The method according to claim 8, wherein determining the first indication information based on the mapping manner of the physical downlink shared channel PDSCH and the configuration manner of the DMRS comprises:
determining the first indication information based on the mapping manner of the PDSCH being type-A, and the configuration manner of the DMRS comprises that a front-loaded DMRS occupies two OFDM symbols, wherein the first indication information indicates whether a plurality of OFDM symbols belong to the first resource, and numbers of the plurality of OFDM symbols are respectively 8, 9, 10, and 11; and
the method further comprises:
sending second indication information and third indication information to the terminal device, wherein the second indication information indicates that the mapping manner of the PDSCH is type-A, and the third indication information indicates that the front-loaded DMRS occupies two OFDM symbols.

12. The method according to claim 11, wherein the first indication information has two bits, one of the two bits indicates whether the OFDM symbols numbered 8 and 9 belong to the first resource, and the other one of the two bits indicates whether the OFDM symbols numbered 10 and 11 belong to the first resource.

13. The method according to claim 4, wherein the preset signal is the CRS or the SSB; and the first indication information comprises information indicating a time-frequency resource location of the preset signal.

14. The method according to any one of claims 1 to 13, wherein the frequency domain resource occupied by the first signal and the available time domain resource are not used for scheduling a signal that uses the following modulation scheme; and
the modulation scheme is any one of 16 quadrature amplitude modulation QAM, 64QAM, 128QAM, 256QAM, and 1024QAM.

15. The method according to any one of claims 1 to 14, wherein the first signal is a signal modulated through on-off keying OOK or a signal modulated through frequency-shift keying FSK.

16. A signal transmission method, wherein the method comprises:
receiving first indication information from a network device, wherein the first indication information is used for determining a first resource;
determining the first resource based on the first indication information, and determining a time domain resource available to the first signal based on the first resource; and
receiving the first signal from the network device based on a frequency domain resource occupied by the first signal and the available time domain resource.

17. The method according to claim 16, wherein the first resource is a time domain resource occupied by a preset signal, a frequency domain resource occupied by the preset signal overlaps the frequency domain resource occupied by the first signal, and the preset signal comprises at least one of an SSB, a DMRS, and a CRS.

18. The method according to claim 16, wherein the first resource is a time domain resource corresponding to at least one of a plurality of reserved time-frequency resource blocks, a time-frequency resource occupied by a preset signal overlaps at least one RE occupied by each of the at least one reserved time-frequency resource block, and the preset signal comprises at least one of an SSB, a DMRS, and a CRS.

19. The method according to any one of claims 16 to 18, wherein the first indication information comprises at least two pieces of bitmap indication information, each bit in first bitmap indication information corresponds to a first time unit, each bit in second bitmap indication information corresponds to a second time unit, and the first bitmap indication information and the second bitmap indication information are any two of the at least two pieces of bitmap indication information.

20. The method according to any one of claims 16 to 18, wherein the first indication information comprises a first bitmap type and bitmap indication information corresponding to the first bitmap type, the first bitmap type is one of a plurality of preset bitmap types, and each of the plurality of preset bitmap types indicates numbers of a plurality of OFDM symbols.

21. The method according to claim 20, wherein numbers indicated by the first bitmap type comprise 6, 7, 9, and 11; or
numbers indicated by the first bitmap type comprise 5, 6, 7, 8, and 9; or
numbers indicated by the first bitmap type comprise 5, 6, 7, 8, 9, and 12; or
numbers indicated by the first bitmap type comprise 8, 9, 10, and 11.

22. The method according to claim 17 or 18, wherein the preset signal is the DMRS;
the first indication information indicates whether a plurality of OFDM symbols belong to the first resource, and numbers of the plurality of OFDM symbols are respectively 6, 7, 9, and 11; and
the method further comprises:
receiving second indication information, wherein the second indication information indicates that a mapping manner of the PDSCH is type-A.

23. The method according to claim 17 or 18, wherein the preset signal is the DMRS;
the first indication information indicates whether a plurality of OFDM symbols belong to the first resource, and numbers of the plurality of OFDM symbols are respectively 5, 6, 7, 8, 9, and 12; and
the method further comprises:
receiving second indication information and third indication information, wherein the second indication information indicates that a mapping manner of the PDSCH is type-A, and the third indication information indicates that a quantity of additional DMRS groups is equal to 3.

24. The method according to claim 17 or 18, wherein the preset signal is the DMRS;
the first indication information indicates whether a plurality of OFDM symbols belong to the first resource, and numbers of the plurality of OFDM symbols are respectively 8, 9, 10, and 11; and
the method further comprises:
receiving second indication information and third indication information, wherein the second indication information indicates that a mapping manner of the PDSCH is type-A, and the third indication information indicates that the front-loaded DMRS occupies two OFDM symbols.

25. The method according to claim 24, wherein the first indication information has two bits, one of the two bits indicates whether the OFDM symbols numbered 8 and 9 belong to the first resource, and the other one of the two bits indicates whether the OFDM symbols numbered 10 and 11 belong to the first resource.

26. The method according to claim 17 or 18, wherein the preset signal is the CRS or the SSB; and
the first indication information comprises information indicating a time-frequency resource location of the preset signal.

27. The method according to claim 26, wherein a terminal device receives the first indication information or the first signal in a first state; and
the terminal device receives the first signal in a second state.

28. The method according to any one of claims 16 to 27, wherein the frequency domain resource occupied by the first signal and the available time domain resource are not used for scheduling a signal that uses the following modulation scheme; and
the modulation scheme is any one of 16QAM, 64QAM, 128QAM, 256QAM, and 1024QAM.

29. The method according to any one of claims 16 to 28, wherein the first signal is a signal modulated through OOK or a signal modulated through FSK.

30. A communication apparatus, comprising a processor and an interface circuit, wherein the interface circuit is configured to: receive a signal from another communication apparatus and transmit the signal to the processor, or send a signal from the processor to another communication apparatus; and the processor is configured to implement the method according to any one of claims 1 to 29 by using a logic circuit or by executing code instructions.

31. A computer-readable storage medium, wherein the storage medium stores a computer program or instructions, and when the computer program or the instructions are executed by a communication apparatus, the method according to any one of claims 1 to 29 is implemented.
